Europäisches Patentamt

European Patent Office

Office européen des brevets

(19)

(11) Veröffentlichungsnummer : **0 108 967**
**B1**

(12) **EUROPÄISCHE PATENTSCHRIFT**

(45) Veröffentlichungstag der Patentschrift :
07.05.86

(51) Int. Cl.⁴ : **B 64 C 27/32, B 64 C 27/48**

(21) Anmeldenummer : 83110633.1

(22) Anmeldetag : 25.10.83

(54) **Rotor, insbesondere eines Drehflügelflugzeuges.**

(30) Priorität : 11.11.82 DE 3241754

(43) Veröffentlichungstag der Anmeldung :
23.05.84 Patentblatt 84/21

(45) Bekanntmachung des Hinweises auf die Patenterteilung : 07.05.86 Patentblatt 86/19

(84) Benannte Vertragsstaaten :
FR GB IT

(56) Entgegenhaltungen :
EP-A- 0 048 799
EP-A- 0 085 128
FR-A- 2 465 643
GB-A- 2 001 025
GB-A- 2 025 340

(73) Patentinhaber : **Messerschmitt-Bölkow-Blohm Gesellschaft mit beschränkter Haftung
Robert-Koch-Strasse
D-8012 Ottobrunn (DE)**

(72) Erfinder : **Frommlet, Hubert, Dipl.-Ing.
Ahornweg 65
D-8011 Höhenkirchen (DE)**
Erfinder : **Hahn, Michael, Dipl.-Ing.
Bahnhofstrasse15b
D-8012 Ottobrunn (DE)**

## Beschreibung

Die Erfindung betrifft einen Rotor gemäß dem Oberbegriff des Patentanspruchs 1.

Bei einem derartigen durch die DE-OS-28 29 605 bekannten Rotor ist die Gelenkverbindung zwischen der (Blattsteuer-)Hülle und Blattwurzel über elastomere Lagersegmente hergestellt, welche die Hülle gegen die Ober- und Unterseite der Blattwurzel großflächig abstützen. Außer einem hohen Baugewicht und großen Blattrückstell- bzw. Blattsteuerkräften bedingt das einen verhältnismäßig großen Lagerinnendurchmesser bei entsprechender Minderung der Lebensdauer der Lagersegmente. Denn bekanntlich besteht ein stark degressiver Zusammenhang zwischen der Größe eines Lagers (bzw. dem Lagerdurchmesser) und dessen Lebensdauer.

Der Erfindung liegt daher bei einem Rotor der eingangs genannten Art außer einer Gewichtsreduzierung und Verringerung der Rückstell- bzw. Blattsteuerkräfte die Aufgabe zugrunde, die Lebensdauer der Gelenkverbindung zwischen der Hülle und Blattwurzel zu steigern.

Diese Aufgabe ist gemäß dem Kennzeichen des Patentanspruchs 1 gelöst. Hiernach erschöpft sich die Erfindung nicht in einem bloßen Rückgriff auf ein herkömmliches Gelenklager, sondern ermöglicht vielmehr dessen Einsatz durch eine Positionierung, die den Forderungen sowohl nach einer geringstmöglichen Lagergröße als auch nach einem von der Lageranordnung unbeeinträchtigten Blattanschluß gleichermaßen nachkommt. Das wird durch die in den Unteransprüchen gekennzeichneten, bevorzugten Ausgestaltungen der Erfindung weiter verdeutlicht, welche nachfolgend in einem Ausführungsbeispiel der Erfindung erläutert werden. Dabei zeigt die Zeichnung von einem Rotor eines Drehflügelflugzeugs in

Figur 1 einen vertikalen Längsschnitt durch die Rotornabe im Bereich eines Blattanschlusses,

Figur 2 eine Draufsicht auf einen Abschnitt eines Rotorblattes für einen Blattanschluß gemäß Fig. 1.

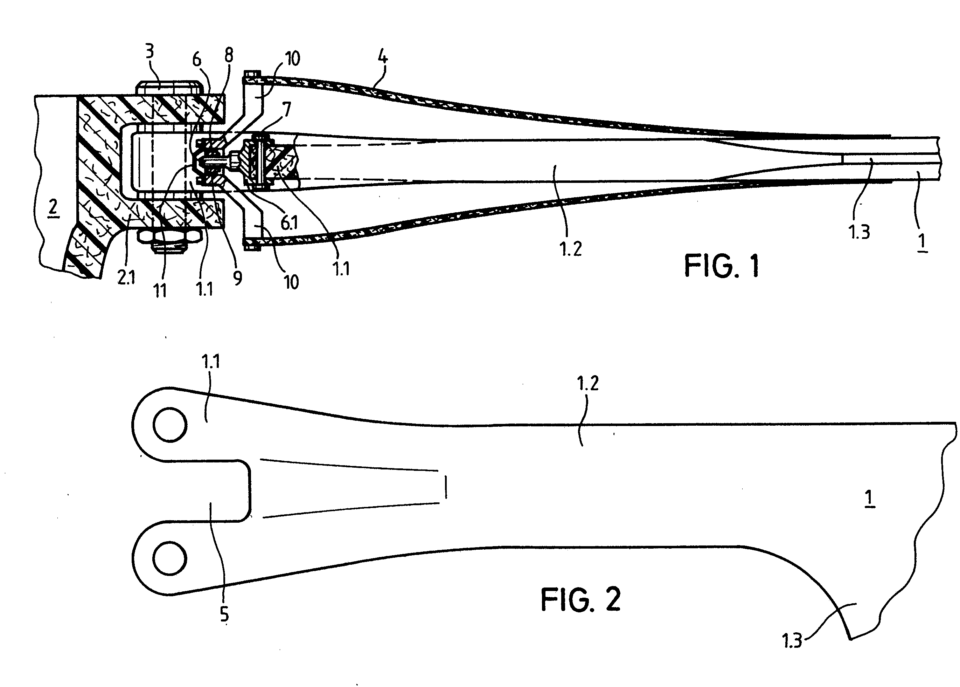

Für den dargestellten Blattanschluß ist die (wie das einzelne Rotorblatt 1) beispielsweise aus faserverstärktem Kunststoff aufgebaute Rotornabe 2 je Blattwurzel 1.1 mit einem radial auswärts gerichteten, gabelförmigen Rotornabenarm 2.1 versehen. Hieran ist die Blattwurzel 1.1 über zwei diese in Dickenrichtung durchquerende Bolzen 3 befestigt ; wegen der gewählten achsparallelen Anordnung der Bolzen 3 zueinander ist in Fig. 1 bloß einer ersichtlich. Um bei einem derartigen sogenannten starren Blattanschluß dennoch sicherzustellen, daß das Rotorblatt 1 bzw. dessen Blattflügel 1.3 Blatteinstellwinkelbewegungen ausführen kann, ist ein torsionsweicher Blatthalsabschnitt 1.2 gewählt. Die gewünschte Torsionsweichheit desselben wird durch den dargestellten relativ langgestreckten Aufbau beispielsweise aus Fasersträngen mit unidirektionaler Faserorientierung in Blattlängsrichtung erreicht.

Wegen der großen Baulänge des Blatthalsabschnittes 1.2 ist für die Blatteinstellwinkelsteuerung eine torsionssteife (Blattsteuer-)Hülle 4 vorgesehen, welche sich, in torsionssteifer Verbindung mit dem Blattflügel 1.3, längs des Blatthalsabschnittes 1.2 berührungsfrei bis zur Blattwurzel 1.1 erstreckt. Hier können in üblicher Weise mittels einer Steuerstange über einen Steuerhebel Drehwinkelbewegungen bewirkt werden, wobei beispielsweise der Steuerhebel eine außenseitig an der Hülle 4 angesetzte Gabel sein kann.

Naturgemäß wäre eine bloß drehwinkelbewegliche Verbindung dieser Hülle 4 mit der Blattwurzel 1.1 unzureichend, weil auch mit Rückwirkungen auf die Hülle 4 aus Biegungen des Blatthalsabschnittes 1.2 und aus Blattlängsdehnungen infolge von Blattschlag- und Blattschwenkbewegungen zu rechnen ist. Im übrigen führt die Steuerstange aufgrund ihrer Hebelwirkung zu Querkräften, die von einer drehwinkelbeweglichen Verbindung allein nicht aufnehmbar sind. Deshalb ist zwischen der Hülle 4 und Blattwurzel 1.1 eine Gelenkverbindung gewählt. Um hierfür mit geringem baulichen Aufwand größtmögliche Verbindungssicherheit bzw. Belastbarkeit ohne Einschränkung der Lebensdauer zu erreichen, ist in einer Materialaussparung 5 der Blattwurzel 1.1 ein koaxial zur Blattwinkelachse angeordneter Zapfen 6 aus Metall als Träger für ein Gelenklager (ebenfalls aus Metall vorzugsweise mit Gleitbeschichtung) vorgesehen. Die Materialaussparung 5 ist gemäß Fig. 2 ein Freiraum zwischen zwei Blattanschlußlaschen der Blattwurzel 1.1, kann u. U. aber ebenso ein Durchbruch derselben sein. Eine lösbare, sichere Verbindung des Zapfens 6 mit der Blattwurzel 1.1 ist über ein Gabelende 6.1 desselben und entsprechende Bolzen 7 hergestellt. Schließlich ist auf dem Zapfen 6 das Kugelstück 8 des Gelenklagers längsverschiebbar angeordnet, wobei dessen Außenring 9 über eine zweiarmige Strebe 10 an der Hülle 4 fixiert ist. In der mit einer zentralen Paßbohrung für das Gelenklager versehenen Strebe 10 braucht der Außenring 9 bloß durch einen Deckel 11 gehalten zu werden.

Erforderlichenfalls wäre es ebenso möglich, einen derartigen mit einem Gelenklager bestückten Zapfen an der Hülle 4 zu fixieren und den Lageraußenring entsprechend an der Blattwurzel 1.1, beispielsweise über ein Rohrstück mit Gabelansatz.

## Patentansprüche

1. Rotor, insbesondere eines Drehflügelflugzeugs, mit einem oder mehreren radial auswärts gerichteten Rotornabenarmen (2.1) jeweils für den Anschluß eines Rotorblattes (1) an der Rotornabe (2) über zwei die zugeordnete Blattwurzel (1.1) in Blattdickenrichtung durchquerende Bolzen (3), wobei die Blattwurzel mit dem Blattflügel (1.3) über einen wenigstens für die Blatteinstellwinkelbewegungen torsionsweichen Blatthalsabschnitt (1.2) in Verbindung steht und die Blatteinstellwinkelsteuerung über eine dem Blatthalsabschnitt entlang berührungsfrei sich erstreckende, torsionssteife Hülle (4) erfolgt, welche einerseits mit der Blattwurzel gelenkig und andererseits mit dem Blattflügel fest verbunden ist, dadurch gekennzeichnet, daß der Blattwurzel (1.1) in einer Materialaussparung (5) ein zur Blattwinkelachse koaxialer Zapfen (6) zugeordnet ist, auf dem ein Kugelstück (8) eines Gelenklagers längsverschiebbar sitzt, dessen Außenring (9) entweder mit der Hülle (4) oder mit der Blattwurzel (1.1) unter Fixierung des Zapfens (6) entweder an der Blattwurzel (1.1) oder an der Hülle (4) fest verbunden ist.

2. Rotor nach Anspruch 1, dadurch gekennzeichnet, daß die Blattwurzel (1.1) mit dem Zapfen (6) und die Hülle (4) über wenigstens eine Strebe (10) mit dem Gelenklager-Außenring (9) bestückt ist.

3. Rotor nach Anspruch 1, gekennzeichnet durch eine Materialaussparung (5) infolge einer Teilung der Blattwurzel (1.1) in zwei einen Zwischenraum freigebende Laschen.

4. Rotor nach Anspruch 2, dadurch gekennzeichnet, daß der Zapfen (6) über ein Gabelende (6.1) an der Blattwurzel (1.1) befestigt ist.

## Claims

1. A rotor, more especially of a rotary-wing aircraft, having one or more radially outwardly directed rotor hub arms (2.1) for the connection of a respective rotor blade (1) to the rotor hub (2) by way of two bolts (3) which traverse the associated root blade (1.1) in the blade thickness direction, in which respect the blade root communicates with the blade vane (1.3) by way of a blade neck portion (1.2) which is torsionally- pliant at least for the blade pitch movements, and blade pitch control is effected by way of a torsionally-rigid sheath (4) which extends along the blade neck portion in a contact-free manner and which is connected on the one hand hingedly to the blade root and on the other hand securely to the blade vane, characterised in that associated with the blade root (1.1) in a material recess (5) is a journal (6) which is coaxial with the blade angle axis and on which a ball piece (8) of a ball-and- socket joint is seated so as to be longitudinally displaceable, the outer ring (9) of which is securely connected to the sheath (4) or to the blade root (1.1) along with fixation of the journal (6) either to the blade root (1.1) or to the sheath (4).

2. A rotor according to claim 1, characterised in that the blade root (1.1) is fitted with the journal (6) and the sheath is fitted, by way of at least one strut (10), with the ball-and-socket-joint outer ring (9).

3. A rotor according to claim 1, characterised by a material recess (5) as a result of a division of the blade root (1.1) into two tongues which free an intermediate space.

4. A rotor according to claim 2, characterised in that the journal (6) is fastened to the blade root (1.1) by way of a fork end (6.1).

## Revendications

1. Rotor, notamment d'un avion à voilure tournante, avec un ou plusieurs bras (2.1) de moyeu de rotor, tournés radialement vers l'extérieur, destinés chacun au raccordement d'une pale (1) de rotor au moyeu (2) du rotor par l'intermédiaire de deux boulons (3) traversant le pied de pale (1.1) correspondant dans le sens de l'épaisseur de la pale, le pied de pale étant assemblé à la voilure de pale (1.3) par l'intermédiaire d'une partie de col de pale (1.2) souple en torsion au moins pour les mouvements de pas de pale, et la commande du pas de pale s'effectuant par l'intermédiaire d'une enveloppe (4) rigide en torsion s'étendant sans la toucher le long de la partie de col de pale, enveloppe qui est d'un côté articulée au pied de pale et de l'autre assemblée rigidement à la voilure de pale, caractérisé par le fait qu'un pivot (6) coaxial à l'axe de variation de pas de pale est disposé dans un évidement (5) du pied de pale (1.1), pivot sur lequel est montée avec possibilité de déplacement longitudinal une partie à rotule (8) d'un palier à rotule dont la bague extérieure (9) est assemblée rigidement soit à l'enveloppe (4), soit au pied de pale (1.1), le pivot (6) étant fixé soit au pied de pale (1.1), soit à l'enveloppe (4).

2. Rotor selon la revendication 1, caractérisé par le fait que le pivot (6) est relié au pied de pale (1.1), et que la bague extérieure (9) du palier à rotule est reliée à l'enveloppe (4) par l'intermédiaire d'au moins une entretoise (10).

3. Rotor selon la revendication 1, caractérisé par le fait que l'évidement (5) est formé par suite de la division du pied de pale (1.1) en deux pattes ménageant un espace intermédiaire.

4. Rotor selon la revendication 2, caractérisé par le fait que le pivot (6) est fixé au pied de pale (1.1) par l'intermédiaire d'une extrémité en forme de chape (6.1).

FIG. 1

FIG. 2

0 108 967